# EUROPÄISCHE PATENTSCHRIFT

(11) **EP 2 212 585 B1**
(45) Veröffentlichungstag und Bekanntmachung des Hinweises auf die Patenterteilung: **18.01.2012**
(21) Anmeldenummer: 08804119.9
(22) Anmeldetag: 12.09.2008
(51) Int. Cl.: F16H 7/12

(54) **SPANNVORRICHTUNG MIT MECHANISCHER DÄMPFUNG FÜR EINEN ZUGMITTELTRIEB**
CLAMPING DEVICE HAVING MECHANICAL DAMPING FOR A TRACTION ENGINE DRIVE
DISPOSITIF TENDEUR A AMORTISSEMENT MECANIQUE POUR UNE TRANSMISSION A MOYEN DE TRACTION

(30) Priorität: 18.10.2007 DE 102007049858
(43) Veröffentlichungstag der Anmeldung: 04.08.2010
(73) Patentinhaber: Schaeffler Technologies GmbH & Co. KG, 91074 Herzogenaurach (DE)
(72) Erfinder: SINGER, Johann, 91091 Grossenseebach (DE); THOMANN, Christine, 91074 Herzogenaurach (DE)
(86) Internationale Anmeldenummer: PCT/EP2008/062156
(87) Internationale Veröffentlichungsnummer: WO 2009/053164

(56) Entgegenhaltungen:
- EP-A- 1 640 636
- WO-A-2007/106971
- DE-A1- 4 029 940
- US-A1- 2003 216 204

## Beschreibung

### Beschreibung

### Gebiet der Erfindung

Die Erfindung betrifft eine Spannvorrichtung mit mechanischer Dämpfung für einen Zugmitteltrieb, mit einem ortsfesten, topfförmigen Basisteil und mit einem über eine Gleitlagerung auf einem zentral angeordneten Lagerzapfen des Basisteils mittels eines nabenförmigen Lagerteils drehgelagerten Spannrollenträger mit zumindest einer Spannrolle, wobei der Spannrollenträger mittels einer in dem gebildeten Ringraum zwischen der Innenkontur der Wandung des topfförmigen Basisteils und dem nabenförmigen Lagerteil des Spannrollenträgers angeordneten und das Lagerteil konzentrisch umgebenden Torsionsfeder zum Basisteil vorgespannt ist.

### Hintergrund der Erfindung

Derartige Spannvorrichtungen sind seit geraumer Zeit in den unterschiedlichsten Ausführungsformen bekannt. US 2003/216204 wird als nächstor Stand der Technik angesehen und offenbart die Merkmale des Oberbegriffs des Anspruchs 1. Die DE 40 29 940 A1 offenbart eine Dämpfungseinrichtung für ein Riemenspannsystem der gattungsgemäßen Art mit mindestens einem schwenkbar an einem Basisteil gelagerten Ringsegment, welches nach Art einer an sich bekannten Bremsbacke an Trommelbremsen mittels einer separaten Druckfeder gegen die Innenkontur eines Gehäuseteils eines Spannrollenträgers federbelastet ist, wobei sich die Druckfeder am Basisteil und am Ringsegment abstützt. Gemäß einer weiteren Ausführungsform wird in dieser Druckschrift vorgeschlagen, die Feder der Dämpfungseinrichtung und die Riemenspannfeder in Form einer Torsionsfeder zu einer einzigen Feder zu vereinigen, welche dann gleichzeitig den Riemen und die Dämpfungseinrichtung spannt. Im Wesentlichen ist dazu vorgesehen, dass die Spannfeder nicht an der Umgebungskonstruktion befestigt ist, sondern sich einseitig an einem Schenkel des Ringsegmentes abstützt und so ein Drehmoment auf dieses Ringsegment ausübt, wodurch dessen Belag an die Innenkontur des Gehäuseteils des Spannrollenträgers gedrückt wird. Die Torsionsfeder ist mit Schenkeln ausgebildet, wobei ein Schenkel in das Gehäuseteil und der andere Schenkel in eine Aussparung eines abgestellten Schwenkarms des Ringsegmentes eingreifen.

Des Weiteren ist aus der DE 196 47 224 A1 ein Reibdämpfer in Form einer Innenbacken-Bremse zur Dämpfung einer oszillierenden Drehbewegung bekannt, mit zwei backenförmigen, jeweils um einen Schwenkzapfen verschwenkbaren Reibbelag-Trägern, die von einer ihnen gegenüber relativ drehbaren Trommel umschlossen und von einem separaten mechanischen, federelastischen Spreizelement radial nach außen gegen die zylindrische Trommel-Innenwandung gedrückt werden.

Ferner offenbart die EP 0 780 597 A1 einen Riemenspanner mit einem Dämpfungsmechanismus, der einen Bremsschuh mit einer äußeren gekrümmten Reibfläche aufweist, der von einer Radialkomponente einer Torsionsfeder, vorliegend eines geradlinig ausgebildeten Endes derselben, radial gegen eine komplementär ausgebildete Innenfläche des verschwenkbaren Spannrollenträgers gedrückt wird und hierdurch ein Dämpfungsreibmoment sowie eine Balancierung des Spannrollenträgers bewirken soll. Der Bremsschuh ist nahe der Grundplatte des topfförmigen Basisteils des Riemenspanners angeordnet. Aufgrund der erforderlichen Spannkräfte bei gegebenen Einbauverhältnissen lässt sich eine Balancierung nur zum Teil ausreichend realisieren, woraus erhöhte Gleitlager-Kantenbelastungen, einhergehend mit einer reduzierten Lebensdauer, resultieren.

Weitere zu vorstehender Lösung vergleichbare Riemenspanner mit einem oder mehreren Brems- bzw. Reibschuhen, hier als Dämpfungsschuhe bezeichnet, sind aus der WO 01/051828 A1 und der WO 03/098071 A1 bekannt. Auch bei diesen Riemenspannern drückt ein geradlinig ausgebildetes, schenkelartiges Federende der Torsionsfeder radial auf einen Brems- bzw. Reibschuh.

### Aufgabe der Erfindung

Der Erfindung liegt die Aufgabe zugrunde, eine weiter verbesserte Spannvorrichtung der gattungsgemäßen Art zu schaffen, welche im Hinblick auf eine zu erzielende Reibungsdämpfung einer oszillierenden Bewegung des Spannrollenträgers insbesondere einfacher aufgebaut und demgemäß kostengünstiger ist, sowie eine komfortable Anpassung der Dämpfungskraft an unterschiedlichste Anforderungen gestattet.

### Zusammenfassung der Erfindung

Gemäß den Merkmalen des Oberbegriffs der Hauptanspruchs betrifft die Erfindung daher eine Spannvorrichtung mit mechanischer Dämpfung für einen Zugmitteltrieb, mit einem ortsfesten, topfförmigen Basisteil und mit einem über eine Gleitlagerung auf einem zentral angeordneten Lagerzapfen des Basisteils mittels eines nabenförmigen Lagerteils drehgelagerten Spannrollenträger mit zumindest einer Spannrolle, wobei der Spannrollenträger mittels einer in dem gebildeten Ringraum zwischen der Innenkontur der Wandung des topfförmigen Basisteils und dem nabenförmigen Lagerteil des Spannrollenträgers angeordneten und das Lagerteil konzentrisch umgebenden Torsionsfeder zum Basisteil vorgespannt ist

Zur Lösung der genannten Aufgabe ist zudem vorgesehen, dass die Torsionsfeder zumindest einenends als schenkellose Feder ausgebildet ist und sich mit dem zumindest einen schenkellosen Federende an einem ersten Reibelement in Form einer Bremsbacke und mit ihrem anderen Federende an einem topfförmigen Basisteil der Spannvorrichtung abstützt, wobei das erste Reibelement über einen Hebelarm, der seinerseits durch einen Ausschnitt in der Wandung des Basisteils hindurchreicht, an dem Spannrollenträger schwenkgelagert und mittels der Torsionsfeder gegen die Innenkontur der Wandung des topfförmigen Basisteils federkraftbeaufschlagt ist.

Die Unteransprüche beschreiben bevorzugte Weiterbildungen oder Ausgestaltungen der Erfindung.

So kann der Torsionsfeder ein zum ersten Reibelement weitestgehend radial gegenüberliegendes zweites Reibelement zugeordnet sein, welches von der Außenkontur der Torsionsfeder gegen die Innenkontur der Wandung des topfförmigen Basisteils federkraftbeaufschlagt oder von einer Federkraft beaufschlagbar ist. Durch diesen Aufbau wird eine vergrößerte Reibfläche genutzt, mittels der eine vergrößerte Dämpfungskraft auf den Spannrollenträger ausübbar ist.

Insofern kann hierbei das zweite Reibelement durch ein teilweise die Torsionsfeder umschließendes Flächenelement mit einer zur Innenkontur des topfförmigen Basisteils weitestgehend komplementär ausgebildeten Kontur gebildet sein.

Wie die Erfindung weiter vorsieht, ist der Außendurchmesser der Torsionsfeder vorzugsweise derart gewählt ist, dass dieselbe in radialer Wirkverbindung mit dem zweiten Reibelement als zusätzliches radiales Stütz- und Zentrierungselement für den Spannrollenträger am Basisteil fungiert.

Vorteilhaft ist durch die Wahl der Länge des Hebelarms des ersten Reibelementes, die Wahl der Größe der gebildeten Reibpaarungsflächen und/oder durch die Wahl der Werkstoffe der Reibungspartner die infolge der Reibung auf den Spannrollenträger wirkende Dämpfungskraft einstellbar ist

Das erste und das zweite Reibelement bestehen gemäß einer bevorzugten Ausführungsform aus Kunststoff, während das Basisteil als zugeordneter Reibungspartner aus einem Leichtmetall, vorzugsweise aus Aluminium besteht. Als Kunststoff bietet sich vorzugsweise ein thermoplastischer Kunststoff, wie ein hochwärmebeständiges Polyamid, an.

Demgegenüber kann auch eine Bauform gemäß der Erfindung sinnvoll sein, bei der das erste und/oder zweite Reibelement und/oder das Basisteil einen separaten Reibbelag aufweisen.

Wie die Erfindung zudem vorsieht, sind durch die Wahl der Abmessungen des Ausschnittes in der Wandung des Basisteils, in Umfangsrichtung desselben gesehen, Endanschläge des Spannrollenträgers definiert und demgemäß der Betriebsbereich der Spannvorrichtung einstellbar.

Die Spannvorrichtung ist zum Einsatz an Zugmitteltriebe geeignet, die durch einen Riemen- oder Kettentrieb gebildet sind.

### Kurze Beschreibung der Zeichnungen

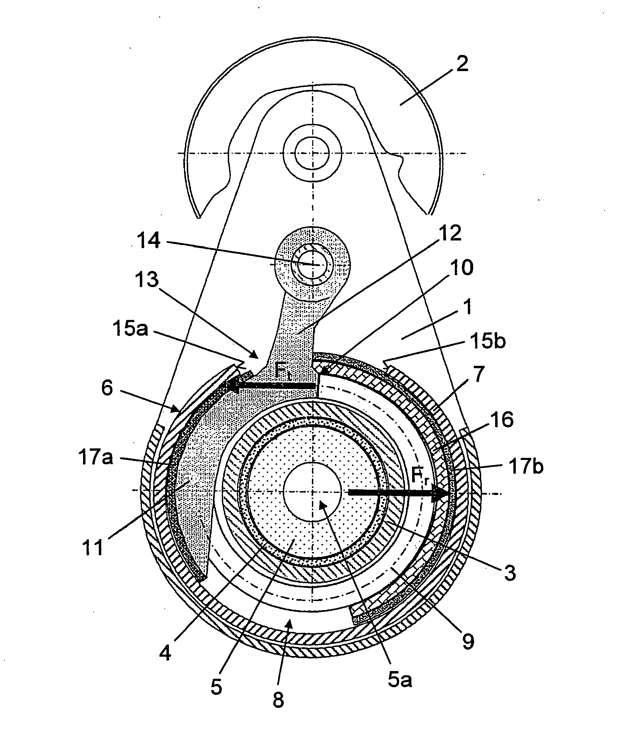

Die Erfindung wird im Folgenden anhand der beiliegenden Zeichnung an einigen Ausführungsformen näher erläutert. Die einzige Figur zeigt einen Radialschnitt durch eine erfindungsgemäß ausgebildete Spannvorrichtung.

### Detaillierte Beschreibung der Zeichnungen

Die Spannvorrichtung für einen nicht näher gezeigten Zugmitteltrieb weist einen an sich bekannten, nach Art eines einarmigen Hebels ausgebildeten Spannrollenträger 1 auf, welcher an seinem freien Ende eine Spannrolle 2 trägt. Das andere Ende des Spannrollenträgers 1 ist mittels eines nabenförmigen Lagerteils 3 über eine Gleitlagerung 4 in Form einer Lagerbuchse auf einem zentral angeordneten Lagerzapfen 5 eines ortsfesten Basisteils 6 drehgelagert, welches seinerseits eine topfförmige Gestalt aufweist und mittels eines mechanischen Befestigungselementes, wie einer Befestigungsschraube, die eine Axialbohrung 5a des Lagerzapfens 5 durchdringt, an einem tragenden Bauteil, welches ein Motor- oder Getriebegehäuse eines Kraftfahrzeugs sein kann, befestigbar ist.

Innerhalb des zwischen der Innenkontur der Wandung 7 des topfförmigen Basisteils 6 und dem nabenförmigen Lagerteil 3 des Spannrollenträgers 1 gebildeten Ringraumes 8 ist eine das nabenförmige Lagerteil 3 konzentrisch umgebende Torsionsfeder 9 angeordnet, welche den Spannrollenträger 1 gegenüber dem Basisteil 6 in Umfangsrichtung vorspannt.

Die Torsionsfeder 9 ist hierbei zumindest einenends, vorzugsweise beidenends, schenkellos ausgebildet und stützt sich mit dem zumindest einen schenkellosen Federende 10 stumpf, also stirnseitig, an einem ersten Reibelement 11 in Form einer Bremsbacke ab, welches seinerseits über einen Hebelarm 12 am Spannrollenträger 1 schwenkgelagert und somit mittels der Torsionsfeder 9 gegen die Innenkontur der Wandung 7 des topfförmigen Basisteils 6 federkraftbeaufschlagt ist. Anderenends stützt sich die Torsionsfeder 9 mittelbar oder unmittelbar am Basisteil 6 ab (nicht näher dargestellt).

Der Hebelarm 12 des ersten Reibelementes 11 reicht durch einen Ausschnitt 13 in der Wandung 7 des topfförmigen Basisteils 6 hindurch, erstreckt sich in Richtung des freien Endes des Spannrollenträgers 1 und ist dort in einem Drehpunkt 14 an demselben schwenkbar befestigt.

Durch die Wahl der Abmessungen des Ausschnitts 13 in der Wandung 7 des Basisteils 6, in Umfangsrichtung desselben gesehen, sind vorteilhaft Endanschläge 15 des Spannrollenträgers 1 realisiert. Zudem ist durch eine solche Wahl der Abmessungen des Ausschnitts 13 der Betriebsbereich der Spannvorrichtung in weiten Grenzen einstellbar.

Im Wesentlichen wird durch die Torsionsfeder 9 in Abhängigkeit von der oszillierenden Bewegung und demgemäß der Schwenkrichtung des Spannrollenträgers 1 eine mehr oder minder hohe Tangentialkraft Fₜ beziehungsweise ein Spannmoment auf das erste Reibelement 11 aufgebracht, wobei diese Tangentialkraft Fₜ gleichzeitig den Spannrollenträger 1 über die Spannrolle 2 gegen das nicht dargestellte Zugmittel drückt.

Um die mittels des ersten Reibelementes 11 erzielbare Dämpfungsrate noch weiter zu erhöhen, ist der Torsionsfeder 9 ein zum ersten Reibelement 11 weitestgehend radial gegenüberliegendes zweites Reibelement 16 zugeordnet, welches von der Außenkontur der Torsionsfeder 9 gegen die Innenkontur der Wandung 7 des topfförmigen Basisteils 6 mit einer radial ausgerichteten Kraft "Fᵣ" federkraftbeaufschlagt oder von einer Federkraft beaufschlagbar ist.

Vorliegend ist das zweite Reibelement 16 durch ein teilweise die Torsionsfeder 9 umschließendes Flächenelement mit einer zur Innenkontur des topfförmigen Basisteils 6 weitestgehend komplementär ausgebildeten Kontur gebildet, so dass eine Mehrzahl von Windungen der Torsionsfeder 9 auf das flächenförmige zweite Reibelement 16 einwirken können.

Der Außendurchmesser der Torsionsfeder 9 ist, wie vorliegend gezeigt, in vorteilhafter Weise derart gewählt, dass dieselbe in radialer Wirkverbindung mit dem zweiten Reibelement 16 als zusätzliches radiales Stütz- und Zentrierungselement für den Spannrollenträger 1 am Basisteil 6 fungiert, wodurch eine verbesserte Balancierung des Spannrollenträgers 1 zu verzeichnen ist, und wodurch eine nachteilige Verkippung desselben, einhergehend mit erhöhtem Lager- und Zugmittelverschleiß, vermieden wird.

Für den Fachmann in Kenntnis der Erfindung leicht nachvollziehbar vergrößert oder verkleinert sich in Abhängigkeit von der Schwenkrichtung und des Grades der Schwenkbewegung des Spannrollenträgers 1 der aktuelle Durchmesser der Torsionsfeder 9, woraus zum einen unterschiedliche Radialkräfte Fᵣ auf das zweite Reibelement 16 und zum anderen unterschiedliche Reib- und Dämpfungskräfte resultieren.

Gemäß einer bevorzugten Ausführungsform der Spannvorrichtung sind das erste und das zweite Reibelement 11, 16 aus einem geeigneten Kunststoff, beispielsweise aus einem thermoplastischen Kunststoff, wie einem hochwärmebeständigen Polyamid, gefertigt, wogegen das Basisteil 6 als zugeordneter Reibungspartner aus einem Leichtmetall, vorzugsweise aus Aluminium besteht. Die Erfindung beschränkt sich jedoch nicht auf diese Werkstoffe, die an sich schon eine geeignete Reibpaarung darstellen, sondern umfasst jegliche an sich bekannten und geeigneten Reibmaterialpaarungen.

So kann es auch sinnvoll sein, die Reibpaarungen zwischen den Reibelementen 11, 16 und dem Basisteil 6 mittels separater Reibbeläge 17a, 17b zu bewerkstelligen, die ihrerseits auf die Reibelemente 11, 16 und/oder das Basisteil 6 form-, kraft- und/oder stoffschlüssig aufgebracht sind.

Durch die Wahl der Länge des Hebelarmes 12 des ersten Reibelementes 11, die Wahl der Größe der gebildeten Reibpaarungsflächen und/oder durch die Wahl der Werkstoffe der Reibungspartner kann die infolge einer Reibung auf den Spannrollenträger 1 wirkende Dämpfungskraft in weiten Grenzen eingestellt werden.

### Bezugszeichen

- 1: Spannrollenträger
- 2: Spannrolle
- 3: Nabenförmiges Lagerteil
- 4: Gleitlagerung
- 5: Lagerzapfen
- 5a: Axialbohrung im Lagerzapfen
- 6: Basisteil
- 7: Wandung des Basisteils
- 8: Ringraum
- 9: Torsionsfeder
- 10: Schenkelloses Federende
- 11: Erstes Reibelement
- 12: Hebelarm des ersten Reibelements
- 13: Ausschnitt der Wandung
- 14: Drehpunkt des Hebelarms
- 15a: Endanschlag
- 15b: Endanschlag
- 16: Zweites Reibelement
- 17a: Reibbelag
- 17b: Reibbelag

## Patentansprüche

1. Spannvorrichtung mit mechanischer Dämpfung für einen Zugmitteltrieb, mit einem ortsfesten, topfförmigen Basisteil (6) und mit einem über eine Gleitlagerung (4) auf einem zentral angeordneten Lagerzapfen (5) des Basisteils (6) mittels eines nabenförmigen Lagerteils (3) drehgelagerten Spannrollenträger (1) mit zumindest einer Spannrolle (2), wobei der Spannrollenträger (1) mittels einer in dem gebildeten Ringraum (8) zwischen der Innenkontur der Wandung (7) des topfförmigen Basisteils (6) und dem nabenförmigen Lagerteil (3) des Spannrollenträgers (1) angeordneten und das Lagerteil (3) konzentrisch umgebenden Torsionsfeder (9) zum Basisteil (6) vorgespannt ist, **dadurch gekennzeichnet, dass** die Torsionsfeder (9) zumindest einenends als schenkellose Feder ausgebildet ist und sich mit dem zumindest einen schenkellosen Federende (10) an einem ersten Reibelement (11) in Form einer Bremsbacke und mit ihrem anderen Federende an einem topfförmigen Basisteil (6) der Spannvorrichtung abstützt, wobei das erste Reibelement (11) über einen Hebelarm (12), der seinerseits durch einen Ausschnitt (13) in der Wandung (7) des Basisteils (6) hindurchreicht, an dem Spannrollenträger (1) schwenkgelagert und mittels der Torsionsfeder (9) gegen die Innenkontur der Wandung (7) des topfförmigen Basisteils (6) federkraftbeaufschlagt ist.

2. Spannvorrichtung nach Anspruch 1, **dadurch gekennzeichnet, dass** der Torsionsfeder (9) ein zum ersten Reibelement (11) weitestgehend radial gegenüberliegendes zweites Reibelement (16) zugeordnet ist, welches von der Außenkontur der Torsionsfeder (9) gegen die Innenkontur der Wandung (7) des topfförmigen Basisteils (6) federkraftbeaufschlagt oder von einer Federkraft beaufschlagbar ist.

3. Spannvorrichtung nach Anspruch 2, **dadurch gekennzeichnet, dass** das zweite Reibelement (16) durch ein teilweise die Torsionsfeder (9) umschließendes Flächenelement mit einer zur Innenkontur des topfförmigen Basisteils (6) weitestgehend komplementär ausgebildeten Kontur gebildet ist.

4. Spannvorrichtung nach Anspruch 2 oder 3, **dadurch gekennzeichnet, dass** der Außendurchmesser der Torsionsfeder (9) derart gewählt ist, dass dieselbe in radialer Wirkverbindung mit dem zweiten Reibelement (16) als zusätzliches radiales Stütz- und Zentrierungselement für den Spannrollenträger (1) am Basisteil (6) fungiert.

5. Spannvorrichtung nach einem der Ansprüche 1 bis 4, **dadurch gekennzeichnet, dass** durch die Wahl der Länge des Hebelarms (12) des ersten Reibelementes (11), die Wahl der Größe der gebildeten Reibpaarungsflächen und/oder durch die Wahl der Werkstoffe der Reibungspartner die infolge der Reibung auf den Spannrollenträger (1) wirkende Dämpfungskraft einstellbar ist.

6. Spannvorrichtung nach einem der Ansprüche 1 bis 5, **dadurch gekennzeichnet, dass** das erste sowie das zweite Reibelement (11, 16) aus Kunststoff bestehen und das Basisteil (6) als zugeordneter Reibungspartner aus einem Leichtmetall besteht.

7. Spannvorrichtung nach Anspruch 6, **dadurch gekennzeichnet, dass** als Kunststoff vorzugsweise ein thermoplastischer Kunststoff, wie ein hochwärmebeständiges Polyamid, gewählt ist.

8. Spannvorrichtung nach einem der Ansprüche 1 bis 7, **dadurch gekennzeichnet, dass** das erste und/oder das zweite Reibelement (11, 16) und/oder das Basisteil (6) einen separaten Reibbelag (17a, 17b) aufweisen.

9. Spannvorrichtung nach einem der Ansprüche 1 bis 8, **dadurch gekennzeichnet, dass** durch die Wahl der Abmessungen des Ausschnitts (13) in der Wandung (7) des Basisteils (6), in Umfangsrichtung desselben gesehen, Endanschläge (15a, 15b) des Spannrollenträgers (1) definiert und demgemäß der Betriebsbereich der Spannvorrichtung einstellbar sind.

10. Spannvorrichtung nach einem der Ansprüche 1 bis 9, **dadurch gekennzeichnet, dass** der Zugmitteltrieb durch einen Riemen- oder Kettentrieb gebildet ist.

## Claims

1. Tensioning device with mechanical damping for a flexible drive, having a stationary, cup-shaped base part (6) and having a tensioning-roller carrier (1) which is rotationally mounted via a sliding bearing (4) on a centrally arranged bearing journal (5) of the base part (6) by means of a hub-shaped bearing part (3) and has at least one tensioning roller (2), the tensioning-roller carrier (1) being prestressed with respect to the base part (6) by means of a torsion spring (9) which is arranged in the annular space (8) formed between the inner contour of the wall (7) of the cup-shaped base part (6) and the hub-shaped bearing part (3) of the tensioning-roller carrier (1) and surrounds the bearing part (3) concentrically, **characterized in that** the torsion spring (9) is formed at least at one end as a legless spring and is supported with the at least one legless spring end (10) on a first friction element (11) in the form of a brake shoe and with its other spring end on a cup-shaped base part (6) of the tensioning device, the first friction element (11) being pivotably mounted on the tensioning-roller carrier (1) via a lever arm (12) which for its part reaches through a cut-out (13) in the wall (7) of the base part (6) and being loaded with a spring force against the inner contour of the wall (7) of the cup-shaped base part (6) by means of the torsion spring (9).

2. Tensioning device according to Claim 1, **characterized in that** the torsion spring (9) is assigned a second friction element (16) which lies as far as possible radially opposite the first friction element (11) and is loaded or can be loaded with a spring force by the outer contour of the torsion spring (9) against the inner contour of the wall (7) of the cup-shaped base part (6).

3. Tensioning device according to Claim 2, **characterized in that** the second friction element (16) is formed by a surface element which encloses the torsion spring (9) partially and has a contour which is of complementary configuration as far as possible with respect to the inner contour of the cup-shaped base part (6).

4. Tensioning device according to Claim 2 or 3, **characterized in that** the external diameter of the torsion spring (9) is selected in such a way that the said torsion spring (9) acts in a radial operative connection with the second friction element (16) as an additional radial supporting and centring element for the tensioning-roller carrier (1) on the base part (6).

5. Tensioning device according to one of Claims 1 to 4, **characterized in that** the damping force which acts on the tensioning-roller carrier (1) as a result of the friction can be set by the selection of the length of the lever arm (12) of the first friction element (11), the selection of the size of the friction-pair surfaces which are formed and/or by the selection of the materials of the friction partners.

6. Tensioning device according to one of Claims 1 to 5, **characterized in that** the first and the second friction element (11, 16) are composed of plastic and the base part (6) is composed of a lightweight metal as associated friction partner.

7. Tensioning device according to Claim 6, **characterized in that** a thermoplastic, such as a highly heat-resistant polyamide, is preferably selected as plastic.

8. Tensioning device according to one of Claims 1 to 7, **characterized in that** the first and/or the second friction element (11, 16) and/or the base part (6) have/has a separate friction lining (17a, 17b).

9. Tensioning device according to one of Claims 1 to 8, **characterized in that** end stops (15a, 15b) of the tensioning-roller carrier (1) are defined by the selection of the dimensions of the cut-out (13) in the wall (7) of the base part (6), as viewed in the circumferential direction of the said base part (6), and accordingly the operating range of the tensioning device can be set.

10. Tensioning device according to one of Claims 1 to 9, **characterized in that** the flexible drive is formed by a belt or chain drive.

## Revendications

1. Dispositif tendeur à amortissement mécanique pour un entraînement à moyen de traction, comprenant une partie de base fixe en forme de pot (6) et un support de galet tendeur (1) monté rotatif au moyen d'une partie de palier (3) en forme de moyeu par le biais d'un palier lisse (4) sur un tourillon de palier (5) de la partie de base (6) disposé centralement, comprenant au moins un galet tendeur (2), le support de galet tendeur (1) étant précontraint vers la partie de base (6) au moyen d'un ressort de torsion (9) disposé dans l'espace annulaire formé (8) entre le contour intérieur de la paroi (7) de la partie de base en forme de pot (6) et la partie de palier (3) en forme de moyeu du support de galet tendeur (1) et entourant concentriquement la partie de palier (3), **caractérisé en ce que** le ressort de torsion (9) est réalisé au moins à une extrémité sous forme de ressort sans branche et s'appuie avec l'au moins une extrémité de ressort sans branche (10) contre un premier élément de friction (11) en forme de mâchoire de frein et avec son autre extrémité de ressort contre une partie de base en forme de pot (6) du dispositif tendeur, le premier élément de friction (11) étant monté de manière pivotante sur le support de galet tendeur (1) par le biais d'un bras de levier (12), qui pénètre pour sa part à travers une découpure (13) dans la paroi (7) de la partie de base (6), et étant sollicité par la force de ressort au moyen du ressort de torsion (9) contre le contour intérieur de la paroi (7) de la partie de base en forme de pot (6).

2. Dispositif tendeur selon la revendication 1, **caractérisé en ce que** le ressort de torsion (9) est associé à un deuxième élément de friction (16) opposé sensiblement radialement au premier élément de friction (11), lequel deuxième élément de friction (16) est ou peut être sollicité par une force de ressort par le contour extérieur du ressort de torsion (9) contre le contour intérieur de la paroi (7) de la partie de base en forme de pot (6).

3. Dispositif tendeur selon la revendication 2, **caractérisé en ce que** le deuxième élément de friction (16) est formé par un élément de surface entourant en partie le ressort de friction (9), ayant un contour réalisé de manière sensiblement complémentaire au contour intérieur de la partie de base en forme de pot (6).

4. Dispositif tendeur selon la revendication 2 ou 3, **caractérisé en ce que** le diamètre extérieur du ressort de torsion (9) est choisi de telle sorte que celui-ci, en liaison fonctionnelle radiale avec le deuxième élément de friction (16), serve d'élément de support et de centrage radial supplémentaire pour le support de galet tendeur (1) sur la partie de base (6).

5. Dispositif tendeur selon l'une quelconque des revendications 1 à 4, **caractérisé en ce que,** par le choix de la longueur du bras de levier (12) du premier élément de friction (11), le choix de la taille des surfaces des paires de friction formées et/ou par le choix des matériaux des partenaires de friction, la force d'amortissement agissant sur le support de galet tendeur (1) du fait de la friction peut être ajustée.

6. Dispositif tendeur selon l'une quelconque des revendications 1 à 5, **caractérisé en ce que** le premier ainsi que le deuxième élément de friction (11, 16) se composent de plastique et la partie de base (6) se compose d'un métal léger en tant que partenaire de friction associé.

7. Dispositif tendeur selon la revendication 6, **caractérisé en ce que** l'on choisit en tant que plastique de préférence un plastique thermoplastique, tel qu'un polyamide hautement résistant à la chaleur.

8. Dispositif tendeur selon l'une quelconque des revendications 1 à 7, **caractérisé en ce que** le premier et/ou le deuxième élément de friction (11, 16) et/ou la partie de base (6) présentent une garniture de friction séparée (17a, 17b).

9. Dispositif tendeur selon l'une quelconque des revendications 1 à 8, **caractérisé en ce que** par le choix des dimensions de la découpure (13) dans la paroi (7) de la partie de base (6), vu dans la direction périphérique de celle-ci, des butées de fin de course (15a, 15b) du support de galet tendeur (1) sont définies, et la zone de fonction du dispositif tendeur peut être ajustée en conséquence.

10. Dispositif tendeur selon l'une quelconque des revendications 1 à 9, **caractérisé en ce que** l'entraînement à moyen de traction est formé par un entraînement à courroie ou à chaîne.
